# EUROPÄISCHE PATENTSCHRIFT

(11) **EP 0 778 860 B1**
(45) Veröffentlichungstag und Bekanntmachung des Hinweises auf die Patenterteilung: **27.01.1999**
(21) Anmeldenummer: 95930492.4
(22) Anmeldetag: 17.08.1995
(51) Int. Cl.: C08J 11/06, C08J 9/20

(54) **RECYCLAT ENTHALTENDE, EXPANDIERBARE STYROLPOLYMERISATE**
EXPANDABLE STYRENE POLYMERS CONTAINING RECYCLATE
POLYMERISATS DE STYRENE EXPANSIBLES CONTENANT UN RECYCLAT

(30) Priorität: 02.09.1994 DE 4431211
(43) Veröffentlichungstag der Anmeldung: 18.06.1997
(73) Patentinhaber: BASF AKTIENGESELLSCHAFT, 67056 Ludwigshafen (DE)
(72) Erfinder: SCHERZER, Dietrich, D-67433 Neustadt (DE); HAHN, Klaus, D-67281 Kirchheim (DE); WITT, Michael, D-67246 Dirmstein (DE); LORENZ, Maria, D-67281 Kirchheim (DE)
(86) Internationale Anmeldenummer: EP9503283
(87) Internationale Veröffentlichungsnummer: WO9607694

(56) Entgegenhaltungen:
- DE-A- 2 104 867
- US-A- 5 269 948

## Beschreibung

Die Erfindung betrifft ein Verfahren zur Herstellung von Recyclat enthaltenden, expandierbaren Styrolpolymerisaten, die zu Schäumen mit verbesserter Schaumstruktur verarbeitet werden können.

Kunststoffe, die auf Styrol und styrolhaltigen Copolymerisaten basieren, werden in großer Menge produziert und in vielen Bereichen der Technik eingesetzt. Eine große Bedeutung haben hierbei auch geschäumte Produkte.

Die Herstellung und Anwendung dieser Produkte ist seit langem bekannt und vielfach beschrieben.

Ein Problem, das insbesondere in jüngerer Zeit besondere Bedeutung erlangte, ist das Recycling von Altkunststoffen.

Im Falle von Polystyrolschaumstoffen sind hierbei verschiedene Verfahren bekannt.

Eine Möglichkeit besteht darin, Abfälle von Polystyrolschaumstoffen oder ungeschäumtem Polystyrol zur Extrusion von Polystyrolschaumstoffen einzusetzen.

Hierbei kann das Recyclat sowohl allein als auch im Gemisch mit frischem Polystyrol eingesetzt werden.

Die Herstellung von Schäumen aus den Recyclaten kann hierbei wie üblich unmittelbar durch Begasung des Polymerisates im Extruder und anschließende Verschäumung zu Platten oder durch Extrusion zu Minigranulat, das mit Treibmittel imprägniert und verschäumt werden kann, erfolgen.

Weiterhin ist es möglich, das gebrauchte Polystyrol in monomerem Styrol zu lösen und diese Lösung nach bekanntem Verfahren wieder zu polymerisieren. Derartige Verfahren sind beispielsweise in US-A-5,269,948 oder JP-A-5 660 096 beschrieben.

Nachteilig bei der Polymerisation von Lösungen von Polystyrol-Recyclat in monomerem Styrol ist insbesondere, daß die Schaumstruktur der unter Verwendung dieser Styrolpolymerisate hergestellten Schäume unbefriedigend ist. Insbesondere wenn Recyclate aus flammfest ausgerüsteten Polystyroltypen verarbeitet werden, kommt es zu einer unerwünschten Feinzelligkeit der resultierenden Polystyrolschaumstoffe.

Aufgabe der Erfindung war es, Recyclat enthaltendes Polystyrol bereitzustellen, das eine gleichmäßige Schaumstruktur ohne unerwünschte Feinzelligkeit und gute mechanische Eigenschaften aufweist sowie einfach herzustellen ist.

Die Aufgabe wurde überraschenderweise dadurch gelöst, daß der Lösung von Polystyrol-Recyclat in vinylaromatischen Monomeren, insbesondere Styrol, während der Polymerisation Alkyldi(2-hydroxyethyl)-amine zugesetzt werden.

Gegenstand der Erfindung ist demzufolge ein Verfahren zur Herstellung von expandierbaren Styrolpolymerisaten, die 10 bis 50 Gew.-%, bezogen auf das Gesamtgewicht des Styrolpolymerisats, Polystyrol-Recyclat enthalten, bei dem das Polystyrol-Recyclat in monomerem Styrol gelöst und diese Lösung in wäßriger Suspension polymerisiert wird, wobei nach der Zugabe des Suspensionsstabilisators dem Reaktionsgemisch Alkyl-di(2-hydroxyethyl)-amine zugesetzt werden.

Die Alkyl-di(2-hydroxyethyl)-amine werden dem Recyclat enthaltenden Polystyrol in einer Menge von 50 bis 1000 ppm, vorzugsweise 50 bis 500 ppm, bezogen auf den Gesamtansatz aus Recyclat und Monomer, zugesetzt.

Der Zusatz der Alkyl-di(2-hydroxyethyl)-amine erfolgt erst nach der Stabilisierung der Perlgröße, also nach dem Zusatz des Suspensionsstabilisators.

Daß die Aufgabe der Erfindung durch den Zusatz der Alkyl-di(2-hydroxyethyl)-amine gelöst werden konnte, war für den Fachmann nicht vorhersehbar.

Zwar ist die Verwendung von Aminen bei der Herstellung von Polystyrolschaumstoffen bekannt, zum Beispiel aus DE-A-25 20 635, doch erfolgte der Einsatz dieser Produkte zumeist bei der Herstellung von flammgeschützten Polystyrolpartikelschäumen oder als Beschichtungsmittel zur Verbesserung der antistatischen Eigenschaften.

Daß der Einsatz derartiger Verbindungen bei Recyclat enthaltenden Polystyrolschaumstoffen zu einer gleichmäßigen Schaumstruktur führen würde, war dem Stand der Technik nicht zu entnehmen.

Als Alkyl-di(2-hydroxyethyl)-amin wird insbesondere C₁₂/C₁₄-Alkyl-di(2hydroxyethyl)-amin verwendet. Dieses Produkt ist zum Beispiel unter der Bezeichnung Armostat® 400 der Firma Akzo im Handel.

In einer besonders vorteilhaften Ausführungsform erfolgt der Einsatz der Alkyl-di(2-hydroxyethyl)-amine gemeinsam mit einem Polyethylenwachs. Das Polyethylenwachs wird dabei vorzugsweise in einer Menge von 500 bis 1000 ppm eingesetzt.

Ein weiterer Gegenstand der Erfindung sind demzufolge expandierbare Styrolpolymerisate, die 10 bis 50 Gew.-%, bezogen auf das Gesamtgewicht des Styrolpolymerisats, Polystyrol-Recyclat enthalten, sowie ferner ein Alkyl-di(2-hydroxyethyl)-amin und ein Polyethylenwachs. In der DE-A-21 04 867 sind feinteilige expandierbare Styrolpolymerisate beschrieben, die Alkylen-di(2-hydroxyethyl)-amine enthalten. Von der Anwesenheit von Polystyrol-Recyclat und einem Polyethylenwachs ist allerdings nicht die Rede.

Die verwendeten Polyethylenwachse haben im allgemeinen ein mittleres Molgewicht (Zahlenmittel) von 2000 bis 6000, vorzugsweise von 2000 bis 4000 und besonders bevorzugt von 2500 bis 3500. Ein besonders geeignetes Polyethylenwachs ist das von der BASF AG angebotene Luwax® mit einem mittleren Molgewicht (Zahlenmittel) von 3000. Die Polyethylenwachse eine haben vorzugsweise eine mittlere Teilchengröße von 5 bis 50 µm. Bei zu großen Teilchen gibt es Probleme mit der Verteilung im Polymerisat, bei zu feinen Produkten kann es zu Staubbelästigungen kommen.

Als vinylgruppenhaltiges Monomer wird insbesondere Styrol eingesetzt. Es können jedoch auch Mischungen von Styrol mit anderen vinylgruppenhaltigen Monomeren eingesetzt werden.

Diese Mischungen haben vorteilhafterweise einen Styrolgehalt von mindestens 50 Gew.-% Styrol. Als andere vinylgruppenhaltige Monomere werden beispielsweise Acrylnitril, Methylstyrol, kernhalogenierte oder kernalkylierte Styrole, Ester der Acrylsäure oder Methacrylsäure von Alkoholen mit bis zu 8 Kohlenstoffatomen, N-Vinylverbindungen, wie Vinylcarbazol, oder auch geringe Mengen an Verbindungen, die zwei polymerisierbare Doppelbindungen enthalten, wie Butadien, Divinylbenzol oder Butadiendiacrylat.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Verschäumen antiverklebend wirkende Stoffe, wie Zinkstearat, Melaminformaldhydkondensate oder Kieselsäure, sowie Mittel zur Verkürzung der Entformzeit beim Ausschäumen, wie Glycerinester oder Hydroxycarbonsäureester. Die Zusatzstoffe können je nach der beabsichtigten Wirkung in den Teilchen homogen verteilt oder als Oberflächenbeschichtung vorliegen.

Zur Herstellung der erfindungsgemäßen Recyclat enthaltenden, expandierbaren Styrolpolymerisate wird das trockene und gegebenenfalls vorverdichtete Polystyrolrecyclat zunächst in den vinylgruppenhaltigen Monomeren gelöst. Die Auflösung erfolgt vorzugsweise bei Raumtemperatur.

Zur Beseitigung von mechanischen, in den vinylgruppenhaltigen Monomeren nicht löslichen Verunreinigungen wird die Lösung vor der Polymerisation vorteilhafterweise einer Filtration unterworfen.

Die Polymerisation erfolgt nach dem Suspensionspolymerisationsverfahren. Dazu wird die Lösung des Polystyrolrecyclats in den Monomeren in den die wäßrige Phase enthaltenden Reaktionskessel überführt und dort die Polymerisation ausgeführt.

Die Suspensionspolymerisation erfolgt im allgemeinen in Gegenwart von Suspensionsstabilisatoren und üblicher styrollöslicher Polymerisationskatalysatoren.

Dabei wird das Treibmittel im allgemeinen während der Polymerisation zugesetzt. Es ist jedoch auch möglich, das Treibmittel in einem nachfolgenden Verfahrensschritt in das Styrolpolymerisat einzubringen.

Für die Herstellung von Schaumstoffen werden die expandierbaren Styrolpolymerisatperlen in bekannter Weise durch Erhitzen auf Temperaturen oberhalb ihres Erweichungspunktes, beispielsweise mit Heißluft oder vorzugsweise mit Dampf, expandiert. Die erhaltenen Schaumstoffpartikel können nach dem Abkühlen und gegebenenfalls einer Zwischenlagerung durch erneutes Erhitzen weiter aufgeschäumt werden. Abschließend können sie in bekannter Weise in nicht gasdicht schließenden Formen zu Formteilen verschweißt werden.

Weitere Angaben zu den üblichen Imprägnier-, Extrusions- und Schäumverfahren finden sich beispielsweise im Kunststoffhandbuch, Band 5, Polystyrol, herausgegeben von R. Vieweg und G. Daumiller, Carl-Hanser-Verlag München,1969.

Die erfindungsgemäß hergestellten Polystyrolschaumstoffe zeichnen sich gegenüber anderen Recyclat enthaltenden Polystyrolschaumstoffen durch eine gleichmäßige Schaumstruktur aus. Auch geringe Verunreinigungen durch andere Polymere und Zusatzstoffe im Recyclat, die durch die üblichen Reinigungsverfahren nicht aus dem Recyclat entfernt werden können, haben keine nachteiligen Auswirkungen auf die Schaumstruktur der erfindungsgemäßen Produkte.

Damit können auch außerhalb des eigentlichen Produktionsprozesses anfallende verschäumte und unverschäumte Polystyrolabfälle, die unterschiedliche Materialkennwerte und auch zum Teil unterschiedliche Zusatzstoffe aufweisen, nach einem sehr einfachen Verfahren wieder zu hochwertigen Schaumstoffen verarbeitet werden. Es ist insbesondere auch möglich, flammfest ausgerüstete Polystyrolabfälle wieder zu Polystyrolpartikelschäumen zu verarbeiten. Die Erfindung soll an nachstehenden Beispielen näher erläutert werden:

### Beispiele 1 - 9

In einem druckfesten 50 l-Rührkessel aus rostfreiem Stahl wurde eine Mischung aus 19,5 kg voll entsalztem Wasser, 19,5 g Na₄P₂O₇ und 52,7 g MgSO₄ vorgelegt. Hierzu wurden 17 kg einer Lösung der in der Tabelle angegebenen Menge Polystyrolrecyclat in Styrol, 17 g Dibenzoylperoxid, 51 g Dicumylperoxid eingefüllt. Die Mischung wurde innerhalb von 2 h von 25 auf 100°C und anschließend innerhalb von 5 h von 100 auf 130°C erhitzt. Bei 130°C wurde die Mischung noch für weitere 3 h gehalten.

Zu der Mischung wurden 55 min nach Erreichen einer Temperatur von 80°C 478 g einer 10 %-igen wäßrigen Polyvinylpyrrolidonlösung (K-Wert 90) nach weiteren 30 min die in der Tabelle angegebenen Mengen an C₁₂/C₁₄-Alkyl-di(2-hydroxyethyl)-amin (Armostat® 400 der Firma Akzo) und Polyethylenwachs (Luwax® der BASF AG) und weiteren 95 min 1,3 kg, entsprechend 7,7 Gew.-%, bezogen auf das Styrolpolymerisat, n-Pentan zugesetzt.

Die erhaltenen Perlen wurden abzentrifugiert, mit kalter Luft im Gegenstrom getrocknet und mit 0,1 Gew.-%, bezogen auf das Gewicht der unbeschichteten Perlen, Ethylen-bis-stearinsäureamid beschichtet.

Anschließend wurde die Perlgrößenfraktion 0,70 bis 1,00 mm herausgesiebt und mit 0,5 Gew.-%, bezogen auf die treibmittelhaltigen Styrolpolymerisate, eines Gemisches aus 40 Gew.-% Citronensäuretristearylester, 50 Gew.-% Glycerinmonostearat und 10 Gew.-% Kieselsäure FK 320 (Firma Goldschmidt) beschichtet.

Es wurde 6 min in einem drucklosen Schäumkasten (Firma Rauscher) vorgeschäumt und von den entstandenen Partikeln die Schaumstruktur bestimmt.

Die genauen Mengenverhältnisse der Einsatzstoffe sowie die Eigenschaften der Schäume sind in Tabelle 1 zusammengestellt. Das Polystyrolrecyclat hatte eine Viskositätszahl von 60 g/ml, einen in Toluol unlöslichen Rückstand von 0,2 Gew.-% und einen Rückstand nach der Veraschung von 0,05 Gew.-%, jeweils bezogen auf das Gewicht des Recyclats.

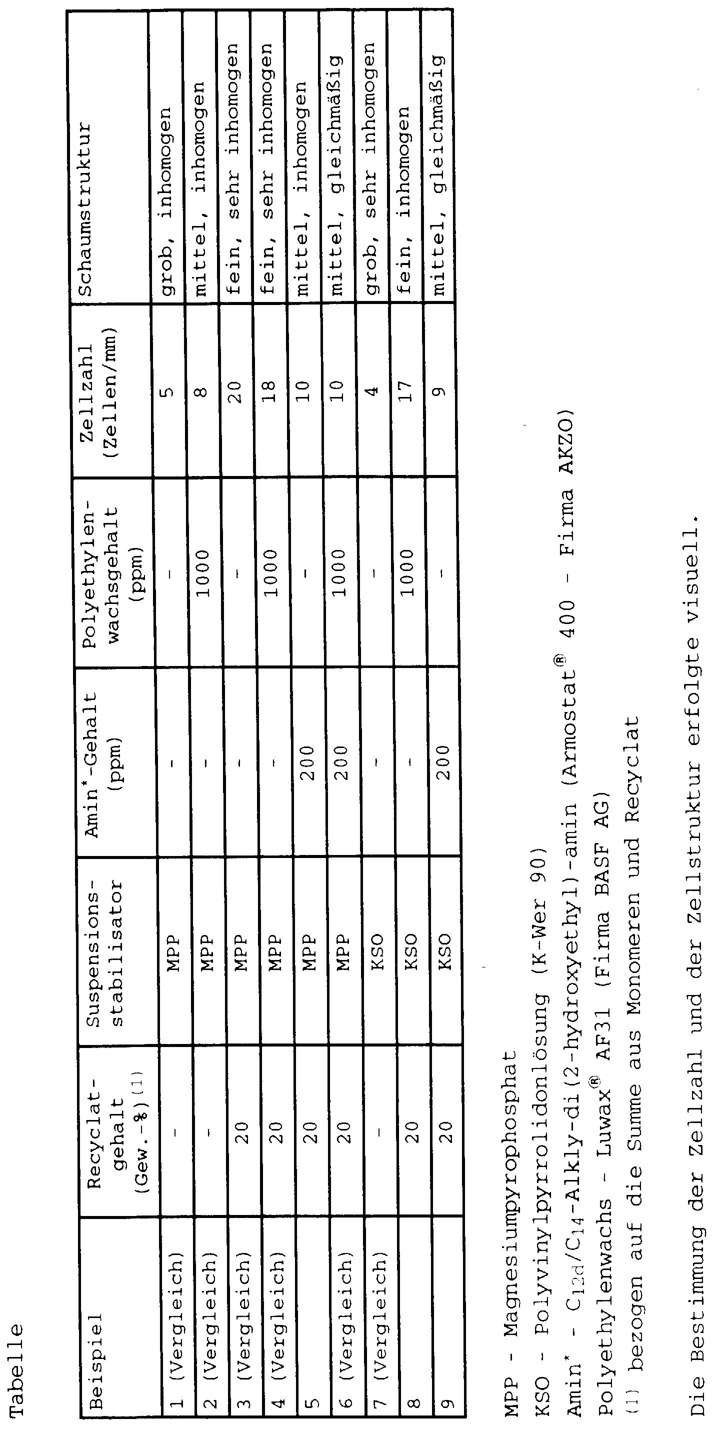

## Patentansprüche

1. Verfahren zur Herstellung von expandierbaren Styrolpolymerisaten, die 10 bis 50 Gew.-%, bezogen auf das Gesamtgewicht des Styrolpolymerisats, Polystyrol-Recyclat enthalten, wobei das Polystyrol-Recyclat in monomerem Styrol gelöst und diese Lösung in wäßriger Suspension polymerisiert wird, dadurch gekennzeichnet, daß nach der Zugabe des Suspensionsstabilisators dem Reaktionsgemisch Alkyl-di(2-hydroxyethyl)-amine zugesetzt werden.

2. Verfahren nach Anspruch 1, dadurch gekennzeichnet, daß dem Reaktionsgemisch 50 bis 1000 ppm Alkyl-di(2-hydroxyethyl)-amine zugesetzt werden.

3. Verfahren nach Anspruch 2, dadurch gekennzeichnet, daß dem Reaktionsgemisch zusätzlich 500 bis 1000 ppm eines Polyethylenwachses zugesetzt werden.

4. Expandierbare Styrolpolymerisate, die 10 bis 50 Gew.-%, bezogen auf das Gesamtgewicht des Styrolpolymerisats, Polystyrol-Recyclat enthalten, dadurch gekennzeichnet, daß sie ein Alkyl-di(2-hydroxyethyl)-amin sowie ein Polyethylenwachs enthalten.

## Claims

1. A process for the preparation of an expandable styrene polymer which contains from 10 to 50 % by weight, based on the total weight of the styrene polymer, of recycled polystyrene, where the recycled polystyrene is dissolved in monomeric styrene and this solution is polymerized in aqueous suspension, which comprises adding alkyldi(2-hydroxyethyl)amines to the reaction mixture after addition of the suspension stabilizer.

2. A process as claimed in claim 1, wherein from 50 to 1000 ppm of alkyldi(2-hydroxyethyl)amines have been added to the reaction mixture.

3. A process as claimed in claim 2, wherein from 500 to 1000 ppm of a polyethylene wax have additionally been added to the reaction mixture.

4. An expandable styrene polymer which contains from 10 to 50 % by weight, based on the total weight of the styrene polymer, of recycled polystyrene and which contains an alkyldi(2-hydroxyethyl)amine and a polyethylene wax.

## Revendications

1. Procédé pour la préparation de polymères de styrène expansibles qui contiennent un produit de recyclage de polystyrène à concurrence de 10 à 50% en poids rapportés au poids total du polymère de styrène, dans lequel on dissout le produit de recyclage de polystyrène dans du styrène monomère et on polymérise cette solution en suspension aqueuse, caractérisé en ce que, après l'addition du stabilisateur de la suspension au milieu réactionnel, on ajoute des alkyl-di(2-hydroxyéthyl)amines.

2. Procédé selon la revendication 1, caractérisé en ce qu'on ajoute, au mélange réactionnel, de 50 à 1.000 ppm d'alkyl-di(2-hydroxyéthyl)amines.

3. Procédé selon la revendication 2, caractérisé en ce qu'on ajoute, au mélange réactionnel, en outre, de 500 à 1000 ppm d'une cire de polyéthylène.

4. Polymères de styrène expansibles qui contiennent un produit de recyclage de polystyrène à concurrence de 10 à 50% en poids rapportés au poids total du polymère de styrène, caractérisés en ce qu'ils contiennent une alkyl-di(2-hydroxyéthyl)amine, ainsi qu'une cire de polyéthylène.
